# EUROPÄISCHE PATENTSCHRIFT

(11) **EP 1 832 450 B1**
(45) Veröffentlichungstag und Bekanntmachung des Hinweises auf die Patenterteilung: **24.02.2010**
(21) Anmeldenummer: 06290390.1
(22) Anmeldetag: 08.03.2006
(51) Int. Cl.: B60H 1/00, F16K 1/22, F16K 11/16

(54) **Klappenanordnung, insbesondere für ein Kraftfahrzeug**
Assembly of damper doors, in particular for a motor vehicle
Agencement de clapets, notamment pour véhicule automobile

(43) Veröffentlichungstag der Anmeldung: 12.09.2007
(73) Patentinhaber: Behr France Rouffach SAS, 68250 Rouffach (FR)
(72) Erfinder: Fleith, Emmanuel, 68000 Colmar (FR)
(74) Vertreter: Grauel, Andreas

(56) Entgegenhaltungen:
- EP-A- 0 423 778
- DE-A1- 19 805 883
- DE-C1- 19 603 944
- US-A- 5 220 944

## Beschreibung

Die Erfindung betrifft eine Klappenanordnung, insbesondere für ein Kraftfahrzeug, gemäß dem Oberbegriff des Anspruchs 1.

Klappen, wie insbesondere Schmetterlingsklappen oder Klappen mit einer seitlich angeordneten Schwenkachse weisen üblicherweise einen gewissen Federweg in Rotationsrichtung auf, der proportional zum Abstand von der Schwenkachse und der Klappendrehung ist. Eine derartige Klappe lässt daher noch Wünsche offen.

Aus der US 5,220,944 ist eine Doppelklappenanordnung eines Klimatisierungssystems eines Kraftfahrzeugs bekannt, welche eine Hauptklappe mit einer Öffnung, die von einer kleineren Klappe abgedeckt werden kann, aufweist. Sowohl die Hauptklappe als auch die innere Klappe sind koaxial an einer Drehachse angeordnet.

Es ist Aufgabe der Erfindung, eine verbesserte Klappenanordnung zur Verfügung zu stellen, die zudem einen möglichst geringen Bauraumbedarf hat.

Diese Aufgabe wird gelöst durch eine Klappenanordnung mit den Merkmalen des Anspruchs 1. Vorteilhafte Ausgestaltungen sind Gegenstand der Unteransprüche.

Erfindungsgemäß ist eine Klappenanordnung, insbesondere für ein Kraftfahrzeug, vorgesehen, die Klappenanordnung, insbesondere für ein Kraftfahrzeug, aufweisend mindestens zwei in Abhängigkeit voneinander betätigbare Klappen, vorgesehen, wobei die beiden Klappen konzentrisch zueinander mit einer gemeinsamen Schwenkachse angeordnet sind, die zweite Klappe eine Öffnung im Bereich der Schwenkachse aufweist, und die erste Klappe ganz oder zumindest mit einem wesentlichen Teil ihrer Klappenfläche Innerhalb oder überwiegend innerhalb der Öffnung der zweiten, äußeren Klappe angeordnet ist. Dabei können Überdeckungen der beiden Klappen in den Randbereichen vorgesehen sein. Die Überdeckungen dienen insbesondere der Abdichtung der beiden Klappen gegeneinander in geschlossener Klappenstellung. Die Klappenanordnung regelt vorzugsweise das Durchströmen von Luft, jedoch kann sie prinzipiell auch für andere Medien, ggf. auch Flüssigkeiten, verwendet werden. Hierbei werden die beiden Klappen über eine einzige Antriebswelle von einem Stellorgan, wie bspw. eines Schrittmotors, betätigt. In Folge der vorliegend festen Koppelung der beiden Klappen beginnen und enden die Stellbewegungen der beiden Klappen gleichzeitig.

In Folge einer erfindungsgemäßen Ausgestaltung der Klappenanordnung ermöglicht sich eine sehr kurze und kompakte Bauweise mit relativ wenig Teilen, wobei die bei herkömmlichen Klappen vorhandenen Federwege im Wesentlichen entfallen.

Eine derartige Klappenanordnung bietet insbesondere dann Vorteile, auch in Hinblick auf eine gute Luftführung, wenn die Eintrittsebene bezüglich der Austrittsebene versetzt ist.

In der geschlossenen Stellung der inneren Klappe liegt vorzugsweise die innere Klappe an der äußeren Klappe an, wofür bevorzugt Kontaktbereiche oder Anlageflächen an mindestens einer der beiden Klappen entsprechend ausgebildet sind, um eine ausreichende Abdichtung der Klappen gegeneinander zu gewährleisten. Die Abdichtungswirkung wird durch einen umlaufenden Rand, ggf aus einem weicheren, elastischen Material, unterstützt. Die äußere Klappe liegt in ihrer geschlossenen Stellung vorzugsweise an einem Gehäuse an, wobei das Gehäuse bevorzugt Teil der Klappenanordnung ist, so dass die Vormontage der Klappen vereinfacht wird und nur das Gehäuse in ein anderes Gehäuse eingebaut oder an einem anderen Gehäuse angebaut werden muss.

Bevorzugt ist die äußere Klappe direkt auf der Welle der inneren Klappe gelagert, wodurch eine sehr kompakte Bauweise möglich ist.

Die innere Klappe durchläuft bevorzugt eine schnellere Schwenkbewegung durchläuft als die äußere Klappe, d.h. die Stellbewegung erfolgt mit größerer Schwenkgeschwindigkeit, jedoch beginnen und enden die Stellbewegungen bevorzugt gleichzeitig.

Bevorzugt hat die innere Klappe einen größeren Schwenkwinkel als die äußere Klappe.

Bei der inneren Klappe handelt es sich bevorzugt um eine Schmetterlingsklappe, wobei die Flügellängen der beiden Seiten bevorzugt gleich sind. Insbesondere bevorzugt ist eine punktsymmetrische Ausgestaltung bezüglich der Schwenkachse.

Die äußere Klappe ist vorzugsweise eine Schmetterlingsklappe mit einer Öffnung im inneren Bereich. Insbesondere bevorzugt ist eine punktsymmetrische Ausgestaltung bezüglich der Schwenkachse.

Die Öffnung in der äußeren Klappe weist vorzugsweise eine rechteckförmige Gestalt auf, wobei die Öffnung bevorzugt etwas kleiner als die innere Klappe ist, so dass eine ausreichende Überdeckung zur dichten Anlage gewährleistet ist.

Für die Übertragung der Stellbewegungen von einem Aktuator, insbesondere einem Elektromotor, ist eine Getriebeanordnung mit zwei Getrieben vorgesehen. Bei den Getrieben handelt es sich vorzugsweise um Zahnradgetriebe. Dabei sind die beiden Getriebe antriebsseitig, d.h. motorseitig, miteinander starr gekoppelt. Dies kann beispielsweise durch die Ausbildung zweier Zahnräder an der Motorwelle erfolgen.

Die beiden Getriebe weisen vorzugsweise unterschiedliche Übersetzungen auf, wodurch die unterschiedlichen Stellbewegungen bewirkt werden. Hierbei ist bevorzugt die Übersetzung des Getriebes der inneren Klappe größer als die Übersetzung des Getriebes der äußeren Klappe.

Die Stellbewegungen der beiden Klappen stehen bevorzugt in einem linearen Verhältnis zueinander. Insbesondere bevorzugt sind Verhältnisse der Stellbewegung des inneren Klappe zur Stellbewegung der äußeren Klappe von 1.5:1 bis 5:1, insbesondere von 2:1 bis 4:1 und ganz besonders bevorzugt von ca. 3:1.

Die Stellbewegung der inneren Klappe beträgt vorzugsweise maximal 80° bis 100°, maximal 85° bis 95°, und insbesondere bevorzugt maximal 90°. Die Stellbewegung der äußeren Klappe beträgt vorzugsweise maximal 20° bis 40°, maximal 25° bis 35° und insbesondere bevorzugt maximal 30°.

Insbesondere bevorzugt ist die erfindungsgemäße Klappenanordnung in einem Luftkanalbereich angeordnet, welcher einen S-förmig ausgebildeten Versatz aufweist, wobei der maximale Öffnungswinkel der äußeren Klappe in seiner Ausrichtung dem mittleren Verlauf des Luftkanals im schrägen Bereich entspricht, und der maximale Öffnungswinkel der inneren Klappe in seiner Ausrichtung dem mittleren Verlauf des Luftkanals im Ein- und/oder Austrittsbereich entspricht.

Im Folgenden wird die Erfindung anhand von eines Ausführungsbeispiels unter Bezugnahme auf die beiliegende Zeichnung im Einzelnen erläutert. In der Zeichnung zeigen:

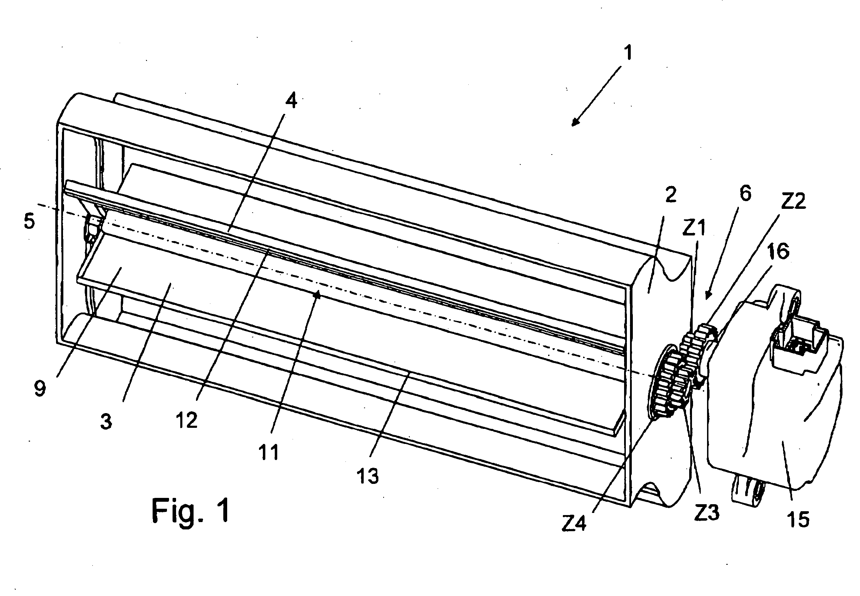

- Fig. 1: eine perspektivische Ansicht einer Klappenanordnung gemäß dem ersten Ausführungsbeispiel,

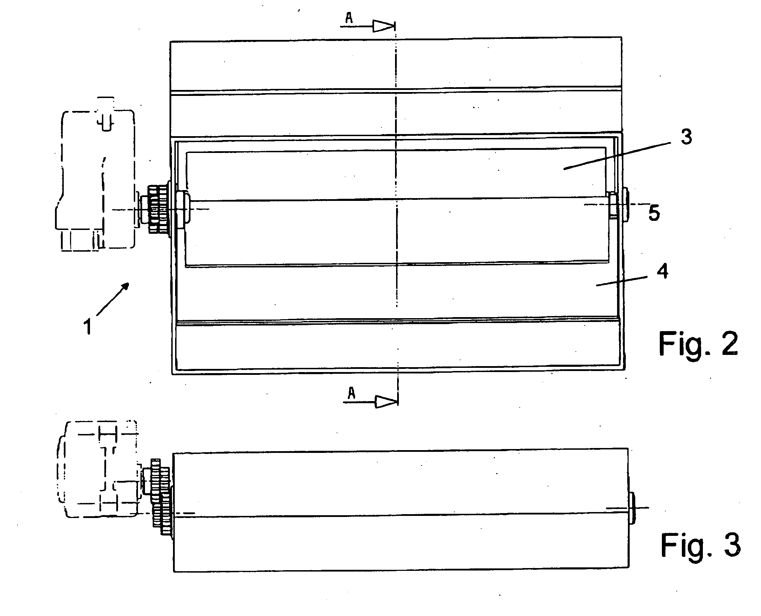

- Fig. 2: eine Seitenansicht von Fig. 1,
- Fig. 3: eine Draufsicht auf Fig. 1,
- Fig. 4a, b: Schnitte entlang Linie A-A in Fig. 2 in geschlossener Stellung (Fig. 4a) und geöffneter Stellung (Fig. 4b),
- Fig. 5: eine Seitenansicht von Fig. 1, und
- Fig. 6: einen Schnitt entlang Linie B-B in Fig. 5.

Eine Klappenanordnung 1 ist in einem Luftkanal eines Kraftfahrzeug-Belüftungssystems angeordnet. Dabei weist die Klappenanordnung 1 ein Gehäuse 2 mit einer durchgehenden, den entsprechenden Teil des Luftkanals bildenden Öffnung mit im Wesentlichen konstantem Strömungsquerschnitt, zwei bezüglich ihres Schwenkbereichs konzentrisch zueinander angeordnete Klappen 3 und 4 mit einer Schwenkachse 5 und eine Getriebeanordnung 6 auf.

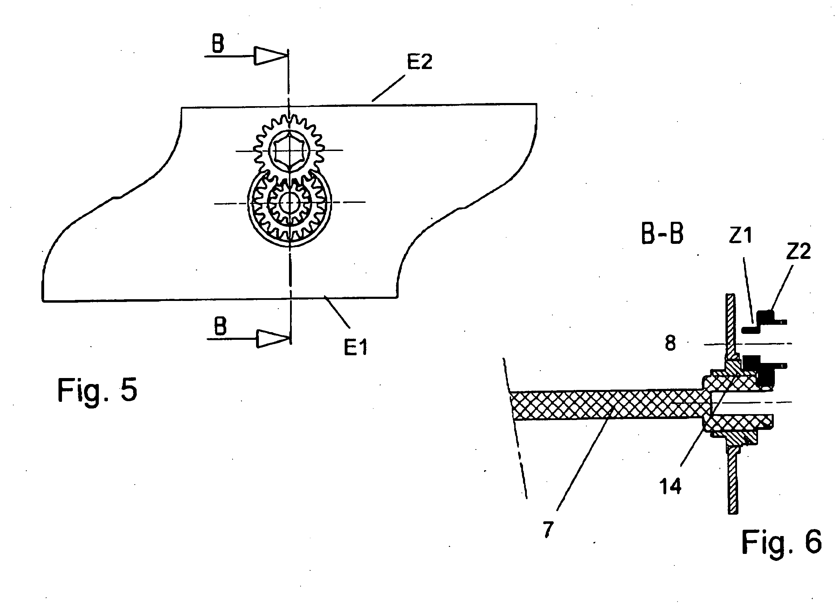

Der Verlauf der den entsprechenden Bereich des Luftkanals bildenden Öffnung ist gemäß dem vorliegenden Ausführungsbeispiel etwa S-förmig ausgebildet, d.h. die Luftströmung wird im Bereich der Klappenanordnung 1 zusätzlich umgelenkt, wobei die Breite des Luftkanals über die gesamte Länge der Öffnung konstant ist. Die Höhe des Luftkanals vergrößert sich in Strömungsrichtung leicht, wobei, wie aus Fig. 5 ersichtlich, die Eintrittsebene E1 im Mittel oberhalb des Mittels der Austrittsebene E2 liegt und die beiden Ebenen parallel zueinander angeordnet sind.

Die Schwenkachse 5 der beiden Klappen 3 und 4 verläuft parallel zu den beiden zuvor genannten Ebenen E1, E2, wobei sie mittig bezüglich der Höhe der den Luftkanal bildenden Öffnung im entsprechenden Querschnitt, der parallel zu den beiden Ebenen E1, E2 verläuft, angeordnet ist.

Die als Kunststoff-Spritzgussteil ausgebildete, innere Klappe 3 weist eine Welle 7 auf, welche sich über die gesamte Breite der Öffnung des Luftkanals erstreckt und endseitig mittels je eines Zapfen 8 in entsprechenden Lagern im Gehäuse 2 gelagert ist. Einstückig mit der Welle 7 ist die etwa schmetterlingsförmige Klappenfläche 9 ausgebildet, wobei die beiden im Wesentlichen eben ausgebildeten Flügelseiten leicht in Öffnungsrichtung versetzt zueinander angeordnet sind. Hierbei ist die Klappenfläche 9 in Richtung der Schwenkachse 5 kleiner als die Gesamtbreite der Öffnung des Luftkanals. An jeder der Klappenflächen 9 ist ein in Schließrichtung weisender Rand 10 ausgebildet. Dieser Rand 10 dient der Abdichtung gegenüber der äußeren Klappe 4. Er kann, gemäß einer Variante des Ausführungsbeispiels im Zweikomponenten-Spritzgussverfahren hergestellt sein und aus einem weicheren, elastischen Kunststoff bestehen, so dass eine bessere Abdichtung gegenüber der äußeren Klappe 4 möglich ist. Der Schwenkwinkel der inneren Klappe 3 beträgt gemäß dem vorliegenden Ausführungsbeispiel 90°.

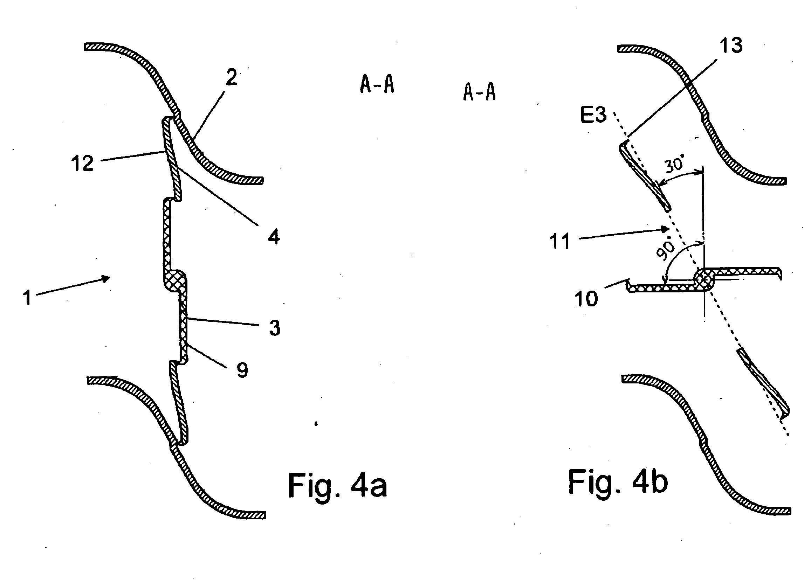

Die ebenfalls als Kunststoffspritzgußteil ausgebildete, äußere Klappe 4 ist auf der Welle 7, vorliegend im Bereich der Zapfen 8, gelagert und somit gegenüber der inneren Klappe 3 verschwenkbar. Hierbei weist die äußere Klappe 4 eine rechteckförmige, schmetterllngsförmige Gestalt auf, wobei im mittleren Bereich eine Öffnung 11 vorgesehen ist, die etwas kleiner als die Klappenfläche 9 der inneren Klappe 3 ist. Die Klappenfläche 12 verläuft in ihrem schwenkachsenseitigen Bereich etwa in einer Ebene, krümmt sich anschließend etwas in Öffnungsrichtung und am äußeren Ende wieder zurück. Die Klappenfläche 12 weist jeweils einen in Schließrichtung weisenden Rand 13 auf, wobei am radial äußeren Ende der Rand 13 beider Flügel etwa in einer Ebene E3 (siehe Fig. 4b) endet, in welcher auch die Schwenkachse 5 verläuft. Dieser Rand 13 dient der Abdichtung gegenüber dem Gehäuse 2. Auf den Außenseiten ist beidseitig der Öffnung 11 ein relativ schmaler Steg vorgesehen, welcher in der Schwenkachse ein Lager 14 auf dem Zapfen 8 der Welle 7 aufweist. Aus Festigkeits- und Fertigungsgründen ist dieser Bereich vorliegend aus einem anderen Material ausgebildet (vgl. Fig. 6). Der Rand 13 kann entsprechend der vorstehend beschriebenen Variante des Ausführungsbeispiels ebenfalls im Zweikomponenten-Spritzgussverfahren hergestellt sein und aus einem weicheren, elastischen Kunststoff bestehen, so dass eine bessere Abdichtung gegenüber dem Gehäuse 2 möglich ist.

Der Schwenkwinkel der äußeren Klappe 4 beträgt gemäß dem vorliegenden Ausführungsbeispiel 30°, ist also deutlich kleiner als der Schwenkwinkel der inneren Klappe 3. Der maximal geöffnete Zustand der äußeren Klappe 4 entspricht in seiner Ausrichtung etwa dem Verlauf des Luftkanals im schrägen Teil (siehe Fig. 4b), während der maximal geöffnete Zustand der inneren Klappe 3 vorliegend waagerecht und in seiner Ausrichtung etwa dem Verlauf des Luftkanals vor oder nach dem Ein- bzw. Ausströmen entspricht.

Gemäß dem vorliegenden Ausführungsbeispiel ist die Getriebeanordnung 6 derart ausgebildet, dass auf einer von einem Motor 15 kommenden Motorwelle 16 zwei Zahnräder Z1 und Z2 ausgebildet sind, welche vorliegend elf bzw. neunzehn Zähne und einen unterschiedlichen Durchmesser haben. Das motorseitig angeordnete, größere Zahnrad Z2 kämmt mit einem kleineren Zahnrad Z3, welches etwa den gleichen Außendurchmesser, wie das Zahnrad Z1, und elf Zähne hat. Das endseitig angeordnete, kleinere Zahnrad Z1 kämmt mit einem größeren Zahnrad Z4, welches etwa den gleichen Außendurchmesser, wie das Zahnrad Z2, und neunzehn Zähne hat.

Das Zahnrad Z3 ist mit der inneren Klappe 3 verbunden, wobei es das Zahnrad Z3 endseitig an der Welle 7 ausgebildet ist, und das Zahnrad Z4 ist mit der äußeren Klappe 4 verbunden, wobei es außenseitig des Lagers 14 angeordnet ist (vgl. Fig. 6).

In Folge der unterschiedlichen Zähnezahlverhältnisse Z1/Z4 und Z2/Z3 und Durchmesser der Zahnräder ergibt sich eine deutlich schnellere Schwenkbewegung der inneren Klappe 3, vorliegend ca. 3x so schnell.

## Patentansprüche

1. Klappenanordnung zur Regelung der Strömung von Medien, insbesondere für ein Kraftfahrzeug, aufweisend mindestens zwei in Abhängigkeit voneinander betätigbare Klappen (3, 4), wobei die beiden Klappen (3 und 4) konzentrisch zueinander mit einer gemeinsamen Schwenkachse (5) angeordnet sind, die zweite Klappe (4) eine Öffnung (11) im Bereich der Schwenkachse (5) aufweist, und die erste Klappe (3) ganz oder zumindest mit einem wesentlichen Teil ihrer Klappenfläche (9) innerhalb oder überwiegend innerhalb der Öffnung (11) der zweiten, äußeren Klappe (4) angeordnet ist, **dadurch gekennzeichnet dass** für die Übertragung der Stellbewegungen von einem Aktuator (15) eine Getriebeanordnung (6) mit zwei Getrieben vorgesehen ist, wobei die beiden Getriebe antriebsseitig, d.h. motorseitig, miteinander starr gekoppelt sind.

2. Klappenanordnung nach Anspruch 1, **dadurch gekennzeichnet, dass** in der geschlossenen Stellung die innere Klappe (3) an der äußeren Klappe (4) anliegt.

3. Klappenanordnung nach Anspruch 1 oder 2, **dadurch gekennzeichnet, dass** in der geschlossenen Stellung die äußere Klappe (4) an einem Gehäuse (2) anliegt.

4. Klappenanordnung nach einem der vorhergehenden Ansprüche, **dadurch gekennzeichnet, dass** die äußere Klappe (4) auf der Welle (7) der inneren Klappe (3) gelagert ist.

5. Klappenanordnung nach einem der vorhergehenden Ansprüche, **dadurch gekennzeichnet, dass** die innere Klappe (3) eine schnellere Schwenkbewegung durchläuft als die äußere Klappe (4).

6. Klappenanordnung nach einem der vorhergehenden Ansprüche, **dadurch gekennzeichnet, dass** die innere Klappe (4) einen größeren Schwenkwinkel hat als die äußere Klappe (3).

7. Klappenanordnung nach einem der vorhergehenden Ansprüche, **dadurch gekennzeichnet, dass** die innere Klappe (3) eine Schmetterlingsklappe ist.

8. Klappenanordnung nach einem der vorhergehenden Ansprüche, **dadurch gekennzeichnet, dass** die äußere Klappe (4) eine Schmetterlingsklappe mit einer Öffnung (11) im inneren Bereich ist.

9. Klappenanordnung nach Anspruch 8, **dadurch gekennzeichnet**, das die Öffnung (11) eine rechteckförmige Gestalt aufweist.

10. Klappenanordnung nach Anspruch 8 oder 9, **dadurch gekennzeichnet**, das die Öffnung (11) etwas kleiner als die Außenabmessungen der inneren Klappe (3) ist.

11. Klappenanordnung nach einem der vorhergehenden Ansprüche, **dadurch gekennzeichnet, dass** jedes Getriebe durch zwei Zahnräder (Z1-Z4 und Z2-Z3) gebildet ist, wobei das eine Zahnrad (Z1 und Z2) fest auf einer Antriebswelle (16) und das andere Zahnrad (Z4 bzw. Z3) fest auf der jeweiligen Welle (7) oder einem schwenkbar gelagerten Bereich der inneren Klappe (3) bzw. der äußeren Klappe (4) angeordnet ist.

12. Klappenanordnung nach Anspruch 11, **dadurch gekennzeichnet, dass** die Zahnräder (Z1 und Z2) auf der Antriebswelle (16) fest miteinander verbunden, insbesondere einstückig miteinander ausgebildet, sind.

13. Klappenanordnung nach einem der vorhergehenden Ansprüche, **dadurch gekennzeichnet, dass** die beiden Getriebe unterschiedliche Übersetzungen aufweisen, wobei die Übersetzung des Getriebes der inneren Klappe (3) größer als die Übersetzung des Getriebes der äußeren Klappe (4) ist.

14. Klappenanordnung nach einem der vorhergehenden Ansprüche, **dadurch gekennzeichnet, dass** die Stellbewegungen der beiden Klappen (3 und 4) in einem linearen Verhältnis zueinander stehen.

15. Klappenanordnung nach einem der vorhergehenden Ansprüche, **dadurch gekennzeichnet, dass** die Stellbewegungen der beiden Klappen (3 und 4) in einem Verhältnis von 1,5:1 bis 5:1, insbesondere von 2:1 bis 4:1 zueinander stehen.

16. Klappenanordnung nach einem der vorhergehenden Ansprüche, **dadurch gekennzeichnet, dass** die Stellbewegung der inneren Klappe (3) maximal 80° bis 100°, insbesondere maximal 90° beträgt.

17. Klappenanordnung nach einem der vorhergehenden Ansprüche, **dadurch gekennzeichnet, dass** die Stellbewegung der äußeren Klappe (4) maximal 20° bis 40°, insbesondere maximal 30° beträgt.

18. Anordnung mit einem Luftkanal und einer Klappenanordnung nach einem der vorhergehenden Ansprüche, **dadurch gekennzeichnet, dass** die Klappenanordnung (1) in einem Luftkanalbereich angeordnet ist, welcher einen S-förmig ausgebildeten Versatz aufweist, wobei der maximale Öffnungswinkel der äußeren Klappe (4) in seiner Ausrichtung dem mittleren Verlauf des Luftkanals im schrägen Bereich entspricht, und der maximale Öffnungswinkel der inneren Klappe (3) in seiner Ausrichtung dem mittleren Verlauf des Luftkanals im Ein- und/oder Austrittsbereich entspricht.

## Claims

1. Assembly of valve flaps for regulating the flow of media, in particular for a motor vehicle, comprising at least two valve flaps (3, 4) actuated in a mutually dependent manner, such that the two flaps (3 and 4) are arranged concentrically with reference to one another with a common pivot axis (5), the second flap (4) having an opening (11) in the area of the pivot axis (5) and the first flap (3) being arranged wholly or at least with a substantial part of its flap area (9) inside or mainly inside the opening (11) of the second, outer flap (4), **characterised in that** to transfer control movements from an actuator (15) a gear arrangement (6) with two gearsets is provided, the said two gearsets being solidly coupled to one another on the drive side, i.e. on the motor side.

2. Valve flap assembly according to Claim 1, **characterised in that** in the closed position the inner flap (3) is in contact with the outer flap (4).

3. Valve flap assembly according to Claims 1 or 2, **characterised in that** in the closed position the outer flap (4) is in contact with a housing (2).

4. Valve flap assembly according to any of the preceding claims, **characterised in that** the outer flap (4) is mounted on the spindle (7) of the inner flap (3).

5. Valve flap assembly according to any of the preceding claims, **characterised in that** the pivoting movement of the inner flap (3) is more rapid than that of the outer flap (4).

6. Valve flap assembly according to any of the preceding claims, **characterised in that** the inner flap (4) moves through a larger pivoting angle than the outer flap (3).

7. Valve flap assembly according to any of the preceding claims, **characterised in that** the inner flap (3) is a Schmetterling valve flap.

8. Valve flap assembly according to any of the preceding claims, **characterised in that** the outer flap (4) is a Schmetterling valve flap with an opening (11) in its inner area.

9. Valve flap assembly according to Claim 8, **characterised in that** the opening (11) is rectangular.

10. Valve flap assembly according to Claims 8 or 9, **characterised in that** the opening (11) is somewhat smaller than the outer dimensions of the inner flap (3).

11. Valve flap assembly according to any of the preceding claims, **characterised in that** each gearset consists of two gearwheels (Z1-Z4 and Z2-Z3), such that one gearwheel *Z1 and Z2) is arranged fixed on a driveshaft (16) and the other gearwheel (Z4 or Z3 respectively) is arranged fixed on the respective spindle (7) or on a pivoting area of the inner flap (3) or the outer flap (4).

12. Valve flap assembly according to Claim 11, **characterised in that** the gearwheels (Z1 and Z2) on the driveshaft (16) are connected fixed to one another, in particular being made integrally with one another.

13. Valve flap assembly according to any of the preceding claims, **characterised in that** the two gearsets have different gear ratios, such that the ratio of the gearset of the inner flap (3) is larger than that of the gearset of the outer flap (4).

14. Valve flap assembly according to any of the preceding claims, **characterised in that** the control movements of the two flaps (3 and 4) are in a linear ratio to one another.

15. Valve flap assembly according to any of the preceding claims, **characterised in that** the control movements of the two flaps (3 and 4) are in a ratio of 1.5 : 1 to 5 : 1, in particular 2 : 1 to 4 : 1 with reference to one another.

16. Valve flap assembly according to any of the preceding claims, **characterised in that** the control movement of the inner flap (3) is at most 80° to 100°, in particular at most 90°.

17. Valve flap assembly according to any of the preceding claims, **characterised in that** the control movement of the outer flap (4) is at most 20° to 40°, in particular at most 30°.

18. Arrangement with an air duct and a valve flap assembly according to any of the preceding claims, **characterised in that** the valve flap assembly (1) is arranged in an area of the air duct having an S-shaped offset such that the maximum opening angle of the outer flap (4) corresponds in its orientation to the central course of the air duct in the oblique area, and the maximum opening angle of the inner flap (3) corresponds in its orientation to the central course of the air duct in the inlet and/or outlet area.

## Revendications

1. Agencement de volets servant à la régulation de l'écoulement de milieux, en particulier pour un véhicule automobile, présentant au moins deux volets (3, 4) pouvant être actionnés indépendamment l'un de l'autre, où les deux volets (3 et 4) comportant un axe de pivotement commun (5) sont disposés de façon concentrique l'un par rapport à l'autre, le deuxième volet (5) présentant une ouverture (11) dans la zone de l'axe de pivotement (5), et le premier volet (3) est disposé, en totalité ou au moins par une partie importante de sa surface de volet (9), à l'intérieur ou principalement à l'intérieur de l'ouverture (11) du deuxième volet extérieur (4),
**caractérisé en ce qu'**il est prévu un agencement d'engrenages (6) à deux engrenages, pour la transmission des mouvements de réglage d'un actionneur (15), où les deux engrenages sont couplés l'un à l'autre de façon rigide, côté entraînement c'est-à-dire côté moteur.

2. Agencement de volets selon la revendication 1, **caractérisé en ce que** le volet intérieur (3), en position fermée, est en appui sur le volet extérieur (4).

3. Agencement de volets selon la revendication 1 ou 2, **caractérisé en ce que** le volet extérieur (4), en position fermée, est en appui sur un carter (2).

4. Agencement de volets selon l'une quelconque des revendications précédentes, **caractérisé en ce que** le volet extérieur (4) est monté sur l'arbre (7) du volet intérieur (3).

5. Agencement de volets selon l'une quelconque des revendications précédentes, **caractérisé en ce que** le volet intérieur (3) effectue un mouvement pivotant plus rapide que le volet extérieur (4).

6. Agencement de volets selon l'une quelconque des revendications précédentes, **caractérisé en ce que** le volet intérieur (3) a un angle de pivotement plus grand que celui du volet extérieur (4).

7. Agencement de volets selon l'une quelconque des revendications précédentes, **caractérisé en ce que** le volet intérieur (3) est un volet papillon.

8. Agencement de volets selon l'une quelconque des revendications précédentes, **caractérisé en ce que** le volet extérieur (4) est un volet papillon comportant une ouverture (11) dans la zone intérieure.

9. Agencement de volets selon la revendication 8, **caractérisé en ce que** l'ouverture (11) présente une forme rectangulaire.

10. Agencement de volets selon la revendication 8 ou 9, **caractérisé en ce que** l'ouverture (11) est un peu plus petite que les dimensions extérieures du volet intérieur (3).

11. Agencement de volets selon l'une quelconque des revendications précédentes, **caractérisé en ce que** chaque engrenage est formé par deux roues dentées (Z1 - Z4 et Z2 - Z3), où l'une des roues dentées (Z1 et Z2) est disposée fixement sur un arbre d'entraînement (16), l'autre roue dentée (Z4 ou Z3) étant disposée fixement sur l'arbre respectif (7) ou sur une zone - montée de façon pivotante - du volet intérieur (3) ou du volet extérieur (4).

12. Agencement de volets selon la revendication 11, **caractérisé en ce que** les roues dentées (Z1 et Z2) sont assemblées fixement l'une à l'autre, sur l'arbre d'entraînement (16), configurées en particulier en formant une seule et même pièce l'une avec l'autre.

13. Agencement de volets selon l'une quelconque des revendications précédentes, **caractérisé en ce que** les deux engrenages présentent des rapports de transmission différents, où le rapport de transmission de l'engrenage du volet intérieur (3) est supérieur au rapport de transmission de l'engrenage du volet extérieur (4).

14. Agencement de volets selon l'une quelconque des revendications précédentes, **caractérisé en ce que** les mouvements de réglage des deux volets (3 et 4) sont dans un rapport linéaire, l'un par rapport à l'autre.

15. Agencement de volets selon l'une quelconque des revendications précédentes, **caractérisé en ce que** les mouvements de réglage des deux volets (3 et 4) sont, l'un par rapport à l'autre, dans un rapport de 1,5 : 1 à 5 : 1, en particulier de 2 : 1 à 4 : 1.

16. Agencement de volets selon l'une quelconque des revendications précédentes, **caractérisé en ce que** le mouvement de réglage du volet intérieur (3) est au maximum de 80° à 100°, en particulier au maximum de 90°.

17. Agencement de volets selon l'une quelconque des revendications précédentes, **caractérisé en ce que** le mouvement de réglage du volet extérieur (4) est au maximum de 20° à 40°, en particulier au maximum de 30°.

18. Agencement comprenant un conduit d'air et un agencement de volets selon l'une quelconque des revendications précédentes, **caractérisé en ce que** l'agencement de volets (1) est disposé dans une zone de conduit d'air qui présente un décalage configuré en forme de S, où l'angle d'ouverture maximum du volet extérieur (4) correspond, dans son orientation, au profil central du conduit d'air dans la zone inclinée, et l'angle d'ouverture maximum du volet intérieur (3) correspond, dans son orientation, au profil central du conduit d'air dans la zone d'entrée et / ou de sortie.
